# FASCICULE DE BREVET EUROPEEN

(11) **EP 3 116 827 B1**
(45) Date de publication et mention de la délivrance du brevet: **31.01.2018**
(21) Numéro de dépôt: 15714588.9
(22) Date de dépôt: 09.03.2015
(51) Int. Cl.: C01B 17/00, C01B 17/02, H01M 4/136, H01M 4/1397, H01M 4/58, H01M 4/62, H01M 10/052, H01M 10/0565, H01M 4/02

(54) **BATTERIE LITHIUM-SOUFRE**
LITHIUM-SCHWEFEL-BATTERIE
LITHIUM-SULFUR BATTERY

(30) Priorité: 13.03.2014 FR 1452087
(43) Date de publication de la demande: 18.01.2017
(73) Titulaire: Blue Solutions, 29500 Ergué Gabéric (FR); Centre National de la Recherche Scientifique, 75016 Paris (FR); Universite de Nantes, 44000 Nantes (FR)
(72) Inventeur: LECUYER, Margaud, 29760 Penmarch (FR); DESCHAMPS, Marc, 29000 Quimper (FR); GAUBICHER, Joël, 44000 Nantes (FR); LESTRIEZ, Bernard, 44000 Nantes (FR); GUYOMARD, Dominique, 44880 Sautron (FR)
(74) Mandataire: Goulard, Sophie
(86) Numéro de dépôt international: PCT/FR2015/050568
(87) Numéro de publication internationale: WO 2015/136197

(56) Documents cités:
- EP-A2- 1 324 409
- CN-A- 101 567 437
- CN-A- 102 447 113
- WU F ET AL: "Electrochemical performance of sulfur composite cathode materials for rechargeable lithium batteries", CHINESE CHEMICAL LETTERS, ELSEVIER LTD, GB, vol. 20, no. 10, 1 octobre 2009 (2009-10-01), pages 1255-1258, XP026495482, ISSN: 1001-8417, DOI: 10.1016/J.CCLET.2009.04.036 [extrait le 2009-07-08]
- WANG J ET AL: "Polymer lithium cells with sulfur composites as cathode materials", ELECTROCHIMICA ACTA, ELSEVIER SCIENCE PUBLISHERS, BARKING, GB, vol. 48, no. 13, 15 juin 2003 (2003-06-15) , pages 1861-1867, XP004429413, ISSN: 0013-4686, DOI: 10.1016/S0013-4686(03)00258-5

## Description

La présente invention se rapporte au domaine des batteries lithium-soufre de hautes densités d'énergie et de puissance. En particulier, la présente invention concerne une électrode positive comprenant un matériau composite comprenant du soufre et du carbone en tant que matière active et son procédé de fabrication, et une batterie lithium-soufre comprenant une telle électrode positive.

Les batteries au lithium sont devenues des constituants indispensables dans de nombreux dispositifs qui comprennent des appareils portables, tels que notamment les téléphones mobiles, les ordinateurs et l'outillage léger, ou des appareils plus lourds tels que des moyens de transports à deux roues (bicyclettes, cyclomoteurs) ou à quatre roues (véhicules automobiles électriques ou hybrides). Elles sont également largement étudiées pour une utilisation dans le domaine du stockage stationnaire d'énergie.

Une batterie au lithium comprend au moins une électrode négative et au moins une électrode positive entre lesquelles est placé un électrolyte solide ou un séparateur imprégné par un électrolyte liquide. L'électrolyte liquide est par exemple constitué d'un sel de lithium en solution dans un solvant choisi pour optimiser le transport et la dissociation des ions. L'électrode positive est constituée par un collecteur de courant supportant un matériau d'électrode qui contient au moins une matière active d'électrode positive capable d'insérer des ions lithium de manière réversible ; l'électrode négative est constituée par une feuille de lithium métallique (éventuellement supportée par un collecteur de courant), d'un alliage de lithium ou d'un composé intermétallique de lithium (batterie au lithium), ou par un collecteur de courant supportant un matériau d'électrode qui contient au moins une matière active d'électrode négative capable d'insérer des ions lithium de manière réversible (batterie aux ions lithium : Li-ion). Chaque matériau d'électrode comprend généralement en outre un polymère qui joue le rôle de liant (e.g. poly(fluorure de vinylidène) ou PVdF) et/ou un agent conférant une conductivité électronique (e.g. carbone).

Au cours du fonctionnement de la batterie, des ions lithium passent de l'une à l'autre des électrodes à travers l'électrolyte. Lors de la décharge de la batterie, une quantité de lithium réagit avec la matière active d'électrode positive à partir de l'électrolyte et une quantité équivalente est introduite dans l'électrolyte à partir de la matière active de l'électrode négative, la concentration en lithium restant ainsi constante dans l'électrolyte. L'insertion du lithium dans l'électrode positive est compensée par apport d'électrons à partir de l'électrode négative *via* un circuit extérieur. Lors de la charge, les phénomènes inverses ont lieu.

Les divers constituants d'une batterie au lithium sont choisis de manière à produire, au coût le plus faible possible, des batteries qui ont une densité d'énergie élevée, une bonne stabilité au cyclage et qui fonctionnent avec sécurité.

Un des systèmes de stockage électrochimique de l'énergie les plus prometteurs est la batterie lithium-soufre, d'une part, parce que le soufre élémentaire S₈ est un élément peu coûteux et, d'autre part, parce qu'une telle batterie peut atteindre théoriquement une capacité spécifique et une densité massique d'énergie élevées respectivement de 1675 mAh/g_{soufre} et de 2600 Wh/kg_{soufre}, si le soufre élémentaire S₈ est complètement réduit en sulfure de lithium Li₂S à une tension proche de 2 volts (par rapport au couple Li⁺/Li⁰). Par comparaison, les densités massiques d'énergie obtenues actuellement sont de 200-250 Wh/kg pour les meilleures batteries Li-ion, de 100-150 Wh/kg pour une batterie Na-ion, de 500 Wh/kg pour une batterie lithium-air et de 50 Wh/kg pour une batterie à flux rédox (bien connue sous l'anglicisme "*redox-flow battery*").

Une telle batterie lithium-soufre comprend généralement une électrode négative (i.e. anode) métallique composée de lithium ou d'un alliage à base de lithium, une électrode positive (i.e. cathode) comprenant du soufre ou un composé organique comprenant du soufre en tant que matière active, et un électrolyte comprenant un sel de lithium.

Le soufre et les composés organiques comprenant du soufre présentent toutefois le désavantage d'être électriquement et ioniquement isolants (e.g. conductivité électronique du soufre S₈ = 5 x 10⁻³⁰ S.cm⁻¹ à 25°C). Afin de permettre une réaction électrochimique réversible à des régimes de courant élevés, le soufre doit donc être en contact intime avec un additif électriquement conducteur tel que le carbone.

Ainsi, Lécuyer et al. [Journal of Power Sources, 2013, 241, 249] ont décrit un procédé de préparation d'une électrode positive comprenant du soufre et du carbone, ledit procédé comprenant une étape de mélange à 80°C d'un noir de carbone (Ketjenblack®), d'un sel de lithium (LiClO₄.3H₂O), d'un copolymère du poly(oxyde d'éthylène) (POE), éventuellement de PVdF, et de soufre dans de l'eau ou du carbonate de propylène afin d'obtenir une pâte d'électrode ; puis une étape de laminage à 95°C de ladite pâte d'électrode sur un collecteur de courant en aluminium recouvert d'une couche à base de carbone, pour obtenir une électrode positive sous forme de film ; et enfin une étape de séchage à 105°C de ladite électrode afin d'évaporer l'eau restante. Lécuyer *et al.* décrivent également une batterie lithium-soufre comprenant ladite électrode positive, une feuille de lithium en tant qu'électrode négative et un électrolyte polymère solide à base de POE. Toutefois, les tests réalisés avec ladite batterie montrent qu'au cours de la décharge, le soufre se transforme en polysulfures à longues chaînes qui sont solubles et, de ce fait, diffusent dans l'électrolyte polymère. Cette diffusion entraîne des changements importants de volume de l'électrolyte polymère qui gonfle et de l'électrode positive qui perd sa morphologie initiale. Cela conduit à l'effondrement de ladite électrode positive après quelques cycles et à une mauvaise cyclabilité de la batterie.

Zhao et al. [Solid State Ionics, 2012, 234, 40] ont décrit un prétraitement du mélange de carbone et de soufre avant la préparation de l'électrode positive afin d'améliorer sa conductivité électronique et d'empêcher la dissolution des polysulfures dans l'électrolyte. Ce prétraitement comprend une étape de mélange d'un noir de carbone mésoporeux avec du soufre dans du tétrahydrofurane, puis une étape de broyage dans un broyeur à billes du mélange de l'étape précédente, puis une étape de séchage sous vide à 60°C pendant 6 heures afin d'évaporer le tétrahydrofurane, puis une étape de premier traitement thermique sous argon à 150°C pendant 5 heures afin de permettre l'incorporation du soufre fondu dans les pores du noir de carbone, et enfin une étape de second traitement thermique sous argon à 300°C pendant 3 heures afin d'évaporer le soufre restant et de former un composite carbone/soufre en tant que matière active d'électrode. Ce prétraitement présente toutefois les inconvénients, d'une part, de ne pas pouvoir être utilisé au stade industriel puisqu'il comporte beaucoup d'étapes et utilise des appareillages sophistiqués et relativement coûteux et, d'autre part, de ne pas permettre l'introduction d'une grande quantité de soufre dans le composite carbone/soufre formé. En effet, les températures élevées utilisées lors du second traitement thermique favorisent l'incorporation du soufre (en phase vapeur) dans les micropores du noir de carbone et tout le soufre qui se trouvait en surface des mésopores à l'issue du premier traitement thermique s'évapore. Par ailleurs, les deux traitements thermiques sont réalisés dans un four tubulaire sous argon, c'est-à-dire dans un milieu non fermé, favorisant ainsi la vaporisation du soufre. D'ailleurs, la cathode obtenue à partir dudit composite carbone/soufre comprend seulement 43% en masse de soufre par rapport à la masse totale de l'électrode. Cependant, lors de l'assemblage de la batterie, l'électrolyte vient « remplir » ladite électrode, induisant une diminution de la proportion massique de soufre dans l'électrode ainsi remplie avant le cyclage. Or, il est nécessaire d'introduire et de conserver dans l'électrode positive une grande quantité de soufre pour parvenir à une densité d'énergie élevée de la batterie.

Le but de la présente invention est de pallier les inconvénients de l'art antérieur précité et de fournir une électrode positive comprenant, à titre de matière active, un matériau composite comprenant du soufre et du carbone dans lequel le soufre est présent en grande quantité et est dispersé de façon homogène, ladite électrode positive étant économique à préparer et permettant d'améliorer les performances électrochimiques d'une batterie lithium-soufre. En outre, un autre but de la présente invention est de mettre au point une batterie économique dans laquelle la diffusion des polysulfures dans l'électrolyte ainsi que l'effondrement de l'électrode positive sont évités, garantissant ainsi l'obtention d'une meilleure cyclabilité.

Ces buts sont atteints par l'invention qui va être décrite ci-après.

L'invention a pour premier objet une électrode positive caractérisée en qu'elle comprend :
- au moins un matériau composite comprenant du soufre (S) et du carbone (C), en tant que matière active d'électrode,
- au moins un liant polymère P₁,
- au moins un polyéther linéaire liquide de faible masse molaire, et
- au moins un sel de lithium L₁,
en ce que le soufre (S) représente au moins 40% en masse environ, de préférence au moins 45% en masse environ, et de préférence encore au moins 50% en masse environ, par rapport à la masse totale de ladite électrode positive, et
en ce que le matériau composite comprenant du soufre (S) et du carbone (C) est obtenu selon les étapes suivantes :
i) une étape de mélange d'un agent carboné essentiellement mésoporeux et d'un agent soufré choisi parmi le soufre élémentaire S₈ et un composé organique soufré comprenant au moins une liaison S-S, la quantité de soufre (S) dans ledit mélange allant de 75% à 85% en masse environ,
ii) une étape de broyage du mélange obtenu à l'étape précédente i),
iii) une étape de traitement thermique du mélange broyé obtenu à l'étape précédente ii) dans un récipient fermé, à une température suffisante pour faire fondre le soufre,
iv) une étape de broyage du mélange traité thermiquement de l'étape précédente iii),
ledit agent carboné utilisé à l'étape i) présentant les caractéristiques suivantes :
- une surface spécifique S_{BET} supérieure ou égale à 700 m²/g environ, et de préférence supérieure ou égale à 800 m²/g environ, ladite surface spécifique étant calculée par la méthode B.E.T (i.e. méthode de Brunauer, Emmett et Teller, 1938),
- une taille moyenne des mésopores comprise entre 4 et 10 nm environ, ladite taille étant calculée par la méthode B.J.H (i.e. méthode de Barrett, Joyner et Halenda, 1951),
- un volume poreux total supérieur ou égal à 1 cm³/g environ, et de préférence supérieur ou égal à 1,5 cm³/g environ, ledit volume poreux total étant calculé par la méthode B.E.T.

Dans la présente invention, l'expression « agent carboné essentiellement mésoporeux » signifie que l'agent carboné comprend un volume mésoporeux représentant au moins 70% en volume environ du volume poreux total, de préférence au moins 80% en volume environ du volume poreux total, et de préférence encore au moins 90% en volume environ du volume poreux total, ledit volume mésoporeux étant calculé à partir de la méthode B.J.H.

Dans la présente invention, l'expression " agent carboné " signifie un agent comprenant essentiellement du carbone, c'est-à-dire comprenant au moins 80% en masse environ de carbone, de préférence au moins 90% en masse environ de carbone, et de préférence encore au moins 95% en masse environ de carbone.

Dans la description qui va suivre et sauf mention contraire explicite, toutes les valeurs de surface spécifique indiquées ont été calculées par la méthode B.E.T. De la même façon, toutes les valeurs de taille de mésopores indiquées ont été calculées par la méthode B.J.H. Enfin, toutes les valeurs de volume poreux total indiquées ont été déterminées par la méthode B.E.T et toutes les valeurs de volume mésoporeux ont été calculées par la méthode B.J.H.

L'agent carboné est de préférence du noir de carbone.

À titre d'exemple de noir de carbone présentant les caractéristiques définies précédemment, on peut citer les noirs de carbone commercialisés sous les références : Ketjenblack 600JD®, Ketjenblack 700JD® et Timcal Ensaco 350G®.

La surface spécifique de l'agent carboné est de préférence supérieure ou égale à 1000 m²/g environ, et encore plus préférentiellement supérieure ou égale à 1400 m²/g environ.

Selon une forme de réalisation préférée de l'invention, le volume poreux total de l'agent carboné est supérieur ou égal à 2 cm³/g environ, et de préférence supérieur ou égal à 2,5 cm³/g environ.

De préférence, les particules d'agent carboné sont sous forme de particules sphériques (i.e. sous forme de billes) afin de favoriser la conduction notamment dans le sens perpendiculaire à l'électrode positive (i.e. dans le sens de son épaisseur) et ainsi de faciliter les échanges électrochimiques entre l'électrode positive et l'électrode négative. En effet, les particules d'agent carboné sous forme de particules sphériques ont une propension à former des réseaux conducteurs tridimensionnels. Lorsque les particules d'agent carboné sont sous forme de particules sphériques, cela signifie que plusieurs atomes de carbone forment des sphères.

Ainsi, afin de favoriser la conduction dans le sens transverse de l'électrode positive (i.e. dans le sens de son épaisseur), l'agent carboné n'est de préférence pas sous forme de fibres ou de plaquettes telles que des fibres de carbone ou des plaquettes de graphène, puisque celles-ci vont s'orienter préférentiellement dans le sens de fabrication du film.

Dans un mode de réalisation particulièrement préféré de l'invention, l'agent carboné comprend des particules de carbone sphériques ayant un diamètre moyen allant de 20 nm à 100 nm environ. Ainsi, chaque sphère comprenant plusieurs atomes de carbone présente un diamètre moyen allant de 20 nm à 100 nm environ.

Selon une forme de réalisation préférée, la quantité de soufre (S) dans le mélange de l'étape i) va de 80% à 85% en masse environ.

La taille des particules de l'agent soufré utilisé dans l'étape 1) n'est pas critique. Ainsi, toute taille de particules d'agent soufré peut être utilisée.

Le composé organique soufré peut être choisi parmi les polysulfures organiques, notamment ceux de formule générale R¹-S-Sₙ-R² dans laquelle R¹ et R², identiques ou différents, représentent une chaîne alkyle linéaire, substituée, ou cyclique, pouvant comprendre de 1 à 20 atomes de carbone, et n étant compris entre 1 et 50 ; et les polymères disulfures présentant un enchaînement de liaisons S-S pouvant être cassées lors du cycle de décharge d'une batterie lithium-soufre et reformées lors du cycle de charge.

L'étape ii) de broyage permet de faciliter la répartition homogène du soufre sur le carbone. Elle peut être effectuée manuellement, notamment à l'aide d'un mortier, ou mécaniquement, notamment à l'aide d'un broyeur à billes.

La température suffisante de l'étape iii) est avantageusement choisie de telle sorte que le soufre soit à l'état liquide et que la viscosité du soufre fondu soit faible.

La température suffisante du traitement thermique de l'étape iii) peut aller de 115°C à 270°C environ, de préférence de 130°C à 220°C environ, et de préférence encore de 140°C à 170°C environ.

La durée du traitement thermique de l'étape iii) peut aller de 30 minutes à 24 heures environ, et de préférence de 1 à 5 heures environ.

L'étape iii) est de préférence effectuée sous atmosphère d'air sec, notamment présentant un point de rosée inférieur ou égal à -30°C environ.

Les inventeurs de la présente demande ont ainsi découvert que lorsque l'agent carboné présente une taille de mésopores particulière allant de 4 à 10 nm, le soufre est capable, lors de l'étape iii), de remplir la porosité de l'agent carboné. En effet, la taille des pores de l'agent carboné doit être suffisamment élevée (c'est-à-dire supérieure à 4 nm) pour permettre au soufre fondu de pénétrer à l'intérieur des pores, mais suffisamment faible (c'est-à-dire inférieure à 10 nm) pour exercer une rétention suffisante des polysulfures lors du cyclage.

De plus, la surface spécifique élevée (S_{BET} ≥ 700 m²/g) de l'agent carboné permet d'obtenir une fine couche de soufre sur tout le squelette formé par l'agent carboné et d'éviter la formation d'agglomérats de soufre dans le matériau composite et, de ce fait, la diffusion rapide du soufre lors du cyclage. Le volume poreux important est également nécessaire pour retenir efficacement les polysulfures formés au cours du cyclage.

Enfin, le matériau composite de l'électrode positive de l'invention présente un revêtement fin de soufre réparti de façon homogène, permettant ainsi d'augmenter son accessibilité lors des réactions électrochimiques et sa stabilité mécanique.

L'étape iv) peut être effectuée manuellement, notamment à l'aide d'un mortier, ou mécaniquement, notamment à l'aide d'un broyeur à billes.

Ainsi, à l'issue de l'étape iv), le matériau composite comprenant du soufre et du carbone est structuré de telle sorte que le soufre forme un revêtement de surface de l'agent carboné en entrant dans les mésopores de celui-ci.

Le procédé peut comprendre en outre entre l'étape iii) et l'étape iv), une étape de refroidissement du récipient fermé comprenant le mélange broyé.

Selon une forme de réalisation préférée, le procédé d'obtention du matériau composite ne comprend pas d'autre(s) étape(s) de traitement thermique que l'étape iii).

Le procédé permettant de conduire au matériau composite de l'électrode positive de l'invention est simple, rapide et ne nécessite pas de dispositif complexe. Grâce à ce procédé, l'enrobage de l'agent carboné par le soufre est facilité avec un faible coût de production.

Dans la présente invention, « un polyéther linéaire de faible masse molaire » signifie un polyéther linéaire de masse molaire inférieure ou égale à 20 000 g·mol⁻¹ environ, de préférence inférieure ou égale à 2000 g·mol⁻¹ environ, et de préférence encore inférieure ou égale à 600 g·mol⁻¹ environ.

Dans la présente invention, « un polyéther linéaire liquide de faible masse molaire » est également appelé « polyéther ».

Il convient de noter que la masse totale de l'électrode positive comprend la masse du matériau composite, la masse du liant polymère P₁, la masse du polyéther et la masse du sel de lithium L₁.

L'électrode positive peut comprendre de 2 à 20% en masse environ de polyéther, et de préférence de 8 à 18% en masse environ de polyéther, par rapport à la masse totale de l'électrode positive.

Le polyéther peut être choisi parmi :
* les polyéthylènes glycols de formule H-[O-CH₂-CH₂]ₘ-OH dans laquelle m est compris entre 1 et 13,
* les éthers de glycol de formule R-[O-CH₂-CH₂]ₚ-O-R' dans laquelle p est compris entre 1 et 13 et R et R', identiques ou différents, sont des groupes alkyles linéaires, substitués ou cycliques, pouvant comprendre de 1 à 20 atomes de carbone,
* les éthers de formule R¹-[CH₂-O]_{q}-R¹' dans laquelle q est compris entre 1 et 13, R¹ et R¹', identiques ou différents, sont des alkyles linéaires, substitués ou cycliques, pouvant comprendre de 1 à 20 atomes de carbone et éventuellement des hétéroatomes,
* les éthers cycliques, les polyéthers cycliques, et
* un de leurs mélanges.

Le(s) polyéther(s) utilisé(s) dans l'électrode positive de l'invention sont particulièrement stables vis-à-vis du lithium et des composés soufrés, permettant ainsi de limiter au maximum les réactions parasites.

Dans un mode de réalisation préféré, le polyéther est le tétra éthylène glycol diméthyléther (TEGDME) de formule CH₃O-(CH₂-CH₂)₄-OCH₃ (i.e. R, R' = CH₃ et p = 4).

Selon une forme de réalisation particulière, l'électrode positive comprend de 5 à 20% en masse environ de liant polymère P₁, et de préférence de 5 à 15% en masse environ de liant polymère P₁, par rapport à la masse totale de l'électrode positive.

Le liant polymère P₁ peut être choisi parmi les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, ou leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polyacrylates tels que le polyméthacrylate de méthyle ; les polyalcools tels que l'alcool polyvinylique, les polymères conducteurs électroniques tels que la polyaniline, le polypyrrole, les polyfluorènes, les polypyrènes, les polyazulènes, les polynaphtalènes, les polyacétylènes, le poly(*p*-phénylène-vinylène), les polycarbazoles, les polyindoles, les polyazépines, les polythiophènes, le polysulfure de *p*-phénylène ou leurs mélanges ; les polymères de type cationique tels que le polyéthylèneimine (PEI), la polyaniline sous forme de sel éméraldine (ES), le poly(*N*-vinylimidazole quaternisé) ou leurs mélanges ; et un de leurs mélanges.

Un polymère de type cationique (i.e. chargé positivement) permet d'améliorer la rétention des polysulfures qui sont chargés négativement dans l'électrode positive et ainsi de limiter la diffusion des polysulfures dans l'électrolyte lors du cyclage.

Le liant polymère P₁ est de préférence le PEI ou l'ES.

Selon une forme de réalisation préférée de l'invention, l'électrode positive comprend uniquement comme liant polymère P₁ le PEI ou l'ES.

Dans un mode de réalisation particulier, l'électrode positive définie dans le premier objet de l'invention ne comprend pas d'agent conférant une conductivité électronique autre que l'agent carboné du matériau composite.

En effet, la présence de l'agent carboné dans le matériau composite peut suffire à conférer à l'électrode positive de l'invention une conductivité électronique suffisante pour permettre un bon fonctionnement de la batterie.

L'électrode positive peut comprendre de 2 à 25% en masse environ de sel de lithium L₁, de préférence de 3 à 15% en masse environ de sel de lithium L₁, et de préférence encore de 3 à 8% en masse environ de sel de lithium L₁, par rapport à la masse totale de l'électrode positive.

Le sel de lithium L₁ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄) et le nitrate de lithium (LiNO₃), le lithium bis(fluorosulfonyl)imide (LiFSI), et leurs mélanges.

LiTFSI est le sel de lithium préféré.

L'électrode positive de l'invention peut présenter une porosité inférieure ou égale à 40% en volume environ, et de préférence inférieure ou égale à 30% en volume environ, par rapport au volume total de l'électrode. Cela permet ainsi d'améliorer la densité d'énergie de la batterie.

L'invention a pour deuxième objet un procédé de fabrication d'une électrode positive telle que définie dans le premier objet de l'invention, caractérisé en ce qu'il comprend les étapes suivantes :
a) une étape de mélange d'un matériau composite comprenant du soufre (S) et du carbone (C) préparé selon un procédé tel que décrit ci-dessus avec au moins un liant polymère P₁, au moins un sel de lithium L₁, au moins un polyéther linéaire liquide de faible masse molaire, et éventuellement au moins un solvant dudit liant polymère P₁, pour obtenir une pâte d'électrode,
b) une étape d'application de ladite pâte d'électrode sur au moins un support,
c) une étape de séchage de ladite pâte d'électrode pour obtenir une électrode positive sous forme de film supporté.

Le liant polymère P₁, le sel de lithium L₁ et le polyéther linéaire liquide de faible masse molaire sont tels que définis dans le premier objet de l'invention.

L'étape a) peut être réalisée par extrusion ou par broyage.

L'extrusion est très avantageuse puisqu'elle permet d'obtenir facilement des électrodes peu poreuses tout en utilisant peu de solvant. Elle permet également d'éviter une étape de calandrage sur l'électrode sèche qui peut engendrer des modifications de structure de l'électrode, nuire au bon enrobage des grains de l'agent carboné, et ainsi peut induire un effondrement de l'électrode au cours du cyclage. Enfin, l'étape de calandrage présente l'inconvénient d'augmenter le nombre d'étapes pour obtenir l'électrode, et ainsi son coût de production.

Le solvant du liant polymère P₁ de l'étape a) permet de solubiliser ledit liant polymère P₁.

Lorsqu'il est présent, ledit solvant représente de préférence moins de 30% en masse environ de la masse totale du mélange de matériau composite, de liant polymère P₁, de sel de lithium L₁ et de polyéther.

L'utilisation, lors de la fabrication de l'électrode positive, d'une faible quantité de solvant du liant polymère P₁ permet de conduire à une électrode positive de faible porosité (i.e. ≤ 40% en volume environ). Cette faible porosité permet de contrôler et d'optimiser la quantité de soufre présente dans l'électrode positive et ainsi de parvenir à des densités volumiques d'énergie optimales.

Le solvant de l'étape a) peut être choisi parmi l'eau, la *N*-méthylpyrrolidone, les solvants de type carbonate tels que le carbonate d'éthylène, le carbonate de propylène, le carbonate de diméthyle, le carbonate de diéthyle ou le carbonate de méthyle et d'éthyle, l'acétone, les alcools tels que le méthanol, l'éthanol ou le propanol, et leurs mélanges.

L'étape b) peut être réalisée par laminage ou par enduction.

Le support peut être un collecteur de courant et/ou un film de support.

À titre d'exemple de collecteur de courant, on peut citer un collecteur de courant en aluminium recouvert d'une couche à base de carbone (couche anticorrosion).

À titre d'exemple de film de support, on peut citer un film plastique de type polyéthylène téréphtalate (PET) siliconé.

Le film supporté d'électrode positive obtenu à l'issue de l'étape c) peut avoir une épaisseur allant de 2 à 100 µm environ, et de préférence de 10 à 60 µm.

L'étape c) peut être réalisée à une température suffisante pour permettre d'éliminer le solvant de l'étape a).

L'invention a pour troisième objet une batterie lithium-soufre, caractérisée en ce qu'elle comprend :
- une électrode positive telle que définie dans le premier objet de l'invention ou telle que fabriquée dans le deuxième objet de l'invention,
- une électrode négative métallique choisie parmi le lithium et un alliage de lithium,
- un électrolyte polymère gélifié comprenant au moins un polyéther linéaire liquide de faible masse molaire, au moins un sel de lithium L₂ et au moins un liant polymère P₂.

L'électrolyte polymère gélifié peut comprendre de 20 à 45% en masse environ de sel de lithium L₂, et de préférence de 30 à 45% en masse environ de sel de lithium L₂, par rapport à la masse totale de l'électrolyte polymère gélifié.

Le sel de lithium L₂ peut être choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), et leurs mélanges.

LiTFSI est le sel de lithium préféré.

L'électrolyte polymère gélifié peut comprendre de 3 à 20% en masse environ de polyéther, et de préférence de 3 à 10% en masse environ de polyéther, par rapport à la masse totale de l'électrolyte polymère gélifié.

Le polyéther linéaire liquide de faible masse molaire (i.e. polyéther) est tel que défini dans le premier objet de l'invention.

Le(s) polyéther(s) utilisé(s) dans l'électrolyte de la batterie de l'invention sont particulièrement stables vis-à-vis du lithium et des composés soufrés, permettant ainsi de limiter au maximum les réactions parasites.

Dans un mode de réalisation préféré, le polyéther est le TEGDME.

Le liant polymère P₂ peut être choisi parmi les polyoléfines telles que les homopolymères ou les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, ou leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polymères non conducteurs électroniques de type anionique tels que le poly(styrène sulfonate), le poly(acide acrylique), le poly(glutamate), l'alginate, la pectine, ou leurs mélanges ; les polyacrylates ; et un de leurs mélanges.

L'électrolyte polymère gélifié peut comprendre de 40 à 80% en masse environ de liant polymère P₂, et de préférence de 50 à 60% en masse environ de liant polymère P₂, par rapport à la masse totale de l'électrolyte polymère gélifié.

Les inventeurs de la présente demande ont découvert que la batterie de l'invention, bien que comprenant une grande quantité de soufre dans l'électrode positive (i.e. au moins 50% en masse de soufre), ne voit pas sa capacité diminuer dès les premiers cycles par comparaison avec les batteries de l'art antérieur, indiquant que la déconnexion des grains de matière active est évitée lors du cyclage.

L'électrolyte polymère gélifié utilisé ralentit la diffusion des polysulfures et stabilise ainsi la capacité de la batterie en limitant les réactions parasites. Le polyéther de l'électrolyte étant sous forme liquide, cela permet d'y solubiliser une plus grande quantité de sel de lithium qu'avec un polyéther polymère solide. La présence importante de sel dans l'électrolyte ralentit la diffusion des polysulfures dans celui-ci. Lorsque la batterie est en fonctionnement, une quantité inférieure de matière active quitte donc l'électrode positive grâce à l'utilisation d'un tel électrolyte polymère gélifié.

On notera également que l'électrolyte polymère gélifié permet aux ions lithium d'atteindre plus facilement le soufre dans la porosité de l'agent carboné par rapport à un électrolyte polymère sec (i.e. solide).

Enfin, par rapport à un séparateur imprégné d'électrolyte liquide, l'électrolyte polymère gélifié de l'invention présente une meilleure résistance aux dendrites et présente l'avantage d'être autoporté.

La batterie conforme à l'invention peut fonctionner entre 20 et 110°C environ, et de préférence entre 60 et 100°C environ. Du fait de la nature gélifiée de l'électrolyte, on peut en outre légèrement abaisser la température de fonctionnement de la batterie comparativement à une batterie LMP (i.e. lithium métal polymère) à électrolyte solide, abaissement qui permet d'améliorer encore la cyclabilité de la batterie.

Une batterie lithium-soufre telle que définie dans le troisième objet de l'invention peut être obtenue selon un procédé de fabrication caractérisé en ce qu'il comprend les étapes suivantes :
A) une étape de préparation d'un électrolyte polymère gélifié par mélange d'au moins un polyéther linéaire liquide de faible masse molaire, au moins un sel de lithium L₂ et au moins un liant polymère P₂, puis extrusion du mélange pour obtenir une pâte d'électrolyte, puis laminage de la pâte d'électrolyte entre deux films de support ; et
B) une étape d'assemblage d'une électrode positive telle que définie dans le premier objet de l'invention ou telle que fabriquée selon le procédé tel que défini dans le deuxième objet de l'invention, d'une électrode négative et de l'électrolyte polymère gélifié tel qu'obtenu à l'étape précédente A).

Le polyéther linéaire liquide de faible masse molaire, le sel de lithium L₂ et le liant polymère P₂ sont tels que définis dans le troisième objet de l'invention.

Les deux films de support peuvent être des films plastiques de PET siliconés.

La présente invention est illustrée par les exemples ci-après, auxquels elle n'est cependant pas limitée.

### EXEMPLES

Les matières premières utilisées dans les exemples sont listées ci-après :
- noir de carbone « porous carbon » (surface spécifique B.E.T : 2000 m²/g), ACS Material,
- noir de carbone « Specialty carbon black 5303 », Asbury,
- noir de carbone « ENSACO™ 350G Conductive Carbon Black », Timcal,
- noir de carbone « Ketjenblack 600JD® », AkzoNobel,
- soufre S₈, de pureté 99,5%, Sigma Aldrich,
- copolymère du POE, « ZSN 8100 », Zeospan,
- copolymère de poly(vinylidènedifluorure et d'hexafluoropropylène) (PVdF-co-HFP), Solvay,
- polyéthylène imine (PEI), 50% (poids/volume) dans H₂O, Sigma Aldrich,
- polyaniline sous la forme de sel Eméraldine (ES), Sigma Aldrich,
- LiTFSI, 3M,
- Film de PET siliconé, Mitsubishi.

Sauf indications contraires, tous les matériaux ont été utilisés tels que reçus des fabricants.

### EXEMPLE 1

### Préparation de plusieurs matériaux composites A, B, 1 et 2

Quatre mélanges carbone/soufre ont été préparés en mélangeant chacun des noirs de carbone ACS, Asbury, Timcal et Ketjenblack avec du soufre S₈ dans les proportions massiques suivantes C/S : 21,7/78,3 (avec les noirs de carbones ACS, Timcal et Ketjenblack) et 18,8/81,2 (avec le noir de carbone Asbury).

Les quatre mélanges C/S ainsi obtenus ont ensuite été broyés au mortier puis entreposés dans quatre récipients fermés.

Les quatre récipients contenant chacun un des différents mélanges broyés de carbone et de soufre ont été soumis à un traitement thermique à une température de 155°C pendant 2 heures.

Les mélanges traités thermiquement ont ensuite été broyés au mortier pour obtenir les quatre matériaux composites suivants :
- **A** comprenant du noir de carbone ACS,
- **B** comprenant du noir de carbone Asbury,
- **1** comprenant du noir de carbone Timcal et
- **2** comprenant du noir de carbone Ketjenblack.

Le tableau 1 ci-dessous présente les caractéristiques [surface spécifique (en m²/g), volume poreux total (en cm³/g), volume poreux (en cm³/g), diamètre moyen des pores (en nm)] des différents noirs de carbone utilisés pour préparer les matériaux composites **A, B, 1** et **2** correspondants :

**TABLEAU 1**

| **Noir de Carbone** | **ACS** | **Asbury** | **Timcal** | **Ketjenblack** |
|---|---|---|---|---|
| **Surface Spécifique (m²/g)** | 3802 (Langmuir) | 183 (B. E.T) | 860 (B.E.T) | 1529 (B.E.T) |
| **Volume total (cm³/g)** | 1,34 (<283 nm)^{a} | 0,49 (< 277 nm)^{a} | 1,21 (< 192 nm)^{a} | 3,24 (< 126 nm)^{a} |
| **Volume B.J.H (cm³/g) 2-50 nm** | ND | 0,30 | 0,96 | 2,84 |
| **Diamètre moyen pores (B.E.T) (nm)** | 2,17 | 10,62 | 5,63 | 8,48 |
| **Diamètre moyen pores (B.J.H) (nm)** | ND | 7,89 | 4,93 | 7,74 |
| **Matériau composite obtenu** | **A ^{(*)}** | **B ^{(*)}** | **1** | **2** |

| | | | | |
|---|---|---|---|---|
| (*) : Matériaux composites ne faisant pas partie de l'invention (^{a}) : diamètre moyen des pores maximum pris en compte pour calculer le volume total. | | | | |

Les différents noirs de carbone testés dans les différents matériaux composites ne possèdent pas les mêmes caractéristiques (taille de pores, volume poreux, surface poreuse, etc...) et présentent donc des performances très différentes.

Il convient de noter que les matériaux composites **1** et **2** sont conformes à l'invention, alors que les matériaux composites **A** et **B** ne font pas partie de l'invention puisque les noirs de carbone ACS et Asbury à partir desquels les matériaux composites **A** et **B** ont été respectivement obtenus n'ont pas les caractéristiques souhaitées en terme de structure poreuse.

La surface spécifique, le volume total poreux, le volume poreux B.J.H, le diamètre moyen des pores de chacun des noirs de carbone ACS, Asbury, Timcal et Ketjenblack ont été évalués à l'aide d'un appareil vendu sous la dénomination commerciale ASAP2010, par la société Microméritics.

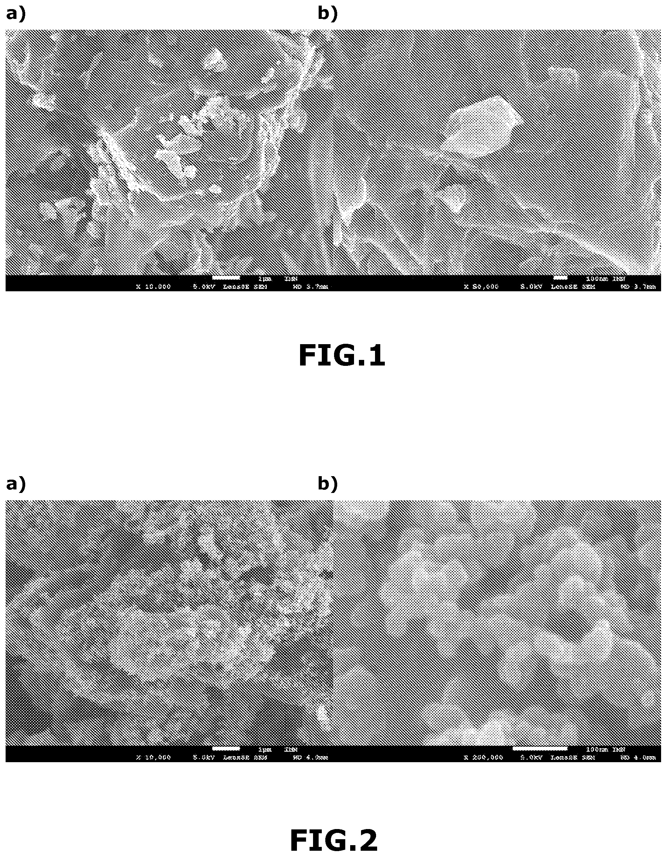

Les figures 1, 2, 3 et 4 montrent respectivement les matériaux composites **A, B, 1** et **2** par microscopie électronique à balayage (MEB). Les figures 1b, 2b, 3b et 4b sont respectivement des grossissements d'une partie des figures 1a, 2a, 3a et 4a.

L'analyse par microscopie électronique à balayage (MEB) a été effectuée à l'aide d'un appareil vendu sous la dénomination commerciale JSM-7600F, par la société Jeol.

La figure 1 montre que le matériau composite **A,** ne faisant pas partie de l'invention et préparé à partir du noir de carbone ACS, comprend des agglomérats de soufre. En effet, le noir de carbone ACS présente une taille moyenne de pores trop petite pour permettre au soufre d'être incorporé et dispersé de façon homogène dans le noir de carbone ACS. La présence d'agglomérats importants de soufre engendre l'effondrement de l'électrode positive lors du cyclage et ne permet pas d'atteindre une bonne cyclabilité.

Comme indiqué dans la présente invention, la taille des pores du carbone doit être suffisamment élevée (c'est-à-dire supérieure à 4 nm) pour permettre au soufre fondu de pénétrer à l'intérieur des pores, mais suffisamment faible (c'est-à-dire inférieure à 10 nm) pour exercer une rétention suffisante des polysulfures lors du cyclage.

La figure 2 montre que dans le matériau composite **B,** ne faisant pas partie de l'invention et préparé à partir du noir de carbone Asbury, le soufre semble mieux dispersé localement même s'il n'est pas présent sur toute la surface du noir de carbone Asbury. En effet, le noir de carbone Asbury présente une taille moyenne de pores appropriée de l'ordre de 9-10 nm, cependant la surface spécifique du noir de carbone Asbury n'est pas suffisante pour permettre au soufre de bien se répartir dans la porosité du carbone. Enfin, son volume poreux total n'est pas non plus suffisamment élevé pour que la totalité du soufre puisse être contenue à l'intérieur de celui-ci.

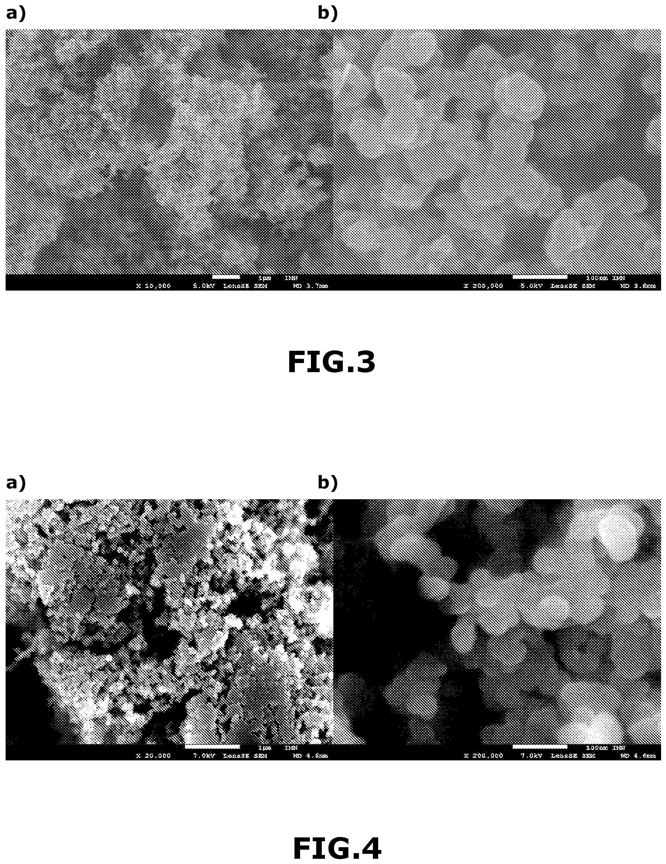

Les figures 3 et 4 montrent que les matériaux composites **1** et **2,** faisant partie de l'invention et préparés respectivement à partir des noirs de carbone Timcal et Ketjenblack, ont la même structure que les noirs de carbone de base. Une brillance indique la présence de soufre. Le soufre, après ce prétraitement, est réparti de façon homogène autour des grains de carbone et ne forme pas d'agglomérats à l'extérieur de ceux-ci.

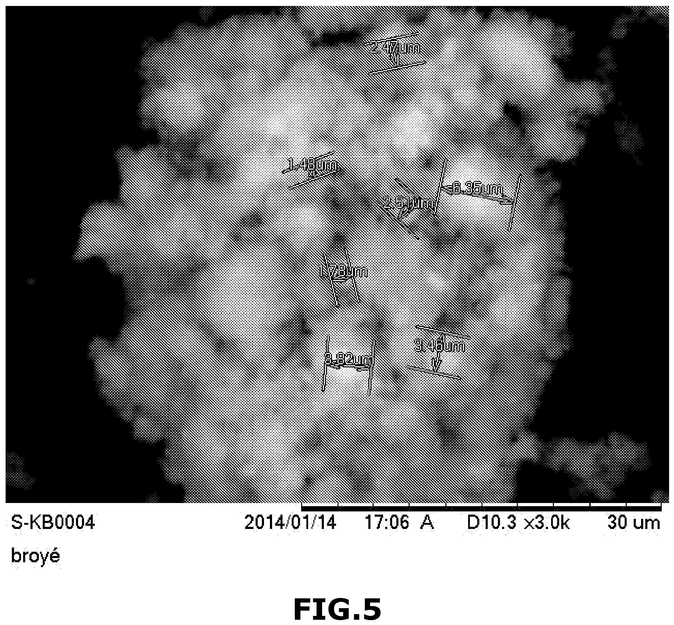

À titre comparatif, la figure 5 montre un mélange de noir de carbone Ketjenblack et de soufre élémentaire (proportions massiques : 18,8% de noir de carbone Ketjenblack et 81,2% de soufre élémentaire) par MEB après l'étape ii) de broyage et avant l'étape iii) de traitement thermique. On observe que le soufre n'enrobe pas les grains de carbone et n'est pas dispersé de façon homogène dans l'agent carboné.

### EXEMPLE 2

### Préparation de plusieurs électrodes positives E-A, E-B, E-1 et E-2

Chacun des matériaux composites **A, B, 1** et **2** obtenus dans l'exemple 1 a été mélangé à 80°C pendant 30 minutes avec du tétraéthylène glycol diméthyl éther (TEGDME), de l'Eméraldine sous forme de sel (ES), un sel de lithium (LiTFSI) et de la *N*-méthylpyrrolidone (NMP) dans un mélangeur vendu sous la dénomination commerciale Plastograph® EC par la société Brabender®. La quantité de NMP utilisée représentait au plus 30% en masse environ de la masse totale du matériau composite, du TEGDME, de l'ES et du sel de lithium.

Chacune des pâtes ainsi obtenues a ensuite été laminée à 95°C sur un collecteur de courant en aluminium recouvert d'une couche à base de carbone.

Chacun des films ainsi obtenus a été séché à 105°C pendant 30 minutes pour obtenir une électrode positive sous forme de film conforme à l'invention.

Le tableau 2 ci-dessous présente la composition massique des quatre électrodes obtenues :

**TABLEAU 2**

| **Electrode** | **Noir de carbone (%)** | **Sel de lithium (%)** | **TEGDME (%)** | **PANI (%)** | **S (%)** |
|---|---|---|---|---|---|
| **E-A^{(*)}** | 15,01 | 17,85 | 4,14 | 9,00 | 54,00 |
| **E-B^{(*)}** | 12,48 | 19,96 | 4,63 | 9,00 | 53,93 |
| **E-1** | 14,98 | 17,93 | 4,16 | 9,00 | 53,93 |
| **E-2** | 15,00 | 17,85 | 4,15 | 9,00 | 54,00 |

| | | | | | |
|---|---|---|---|---|---|
| (*) : Electrode ne faisant pas partie de l'invention | | | | | |

### EXEMPLE 3

### Fabrication de batteries comprenant les électrodes positives E-A, E-B, E-1 et E-2

### a) Préparation d'un électrolyte polymère gélifié EG conforme à l'invention

Du sel de lithium (LiTFSI) (39% en masse) a été dissous dans du TEGDME (6% en masse) sous agitation magnétique à 50°C. Puis, au mélange obtenu, ont été ajoutés un copolymère du POE Zeospan® (20% en masse) et du PVdF-co-HFP, (35% en masse). Le mélange résultant a été malaxé dans le mélangeur Plastograph® EC tel que décrit dans l'exemple 2, à 130°C pendant 1 heure. La pâte d'électrolyte obtenue a été laminée à 125°C entre deux films plastiques de PET siliconés.

### b) Montage des batteries

Quatre batteries **B-A, B-B, B-1** et **B-2** ont été respectivement préparées en assemblant sous atmosphère anhydre (air avec un point de rosée < -40°C) par laminage à 5 bars et à 80°C :
- chacune des quatre électrodes positives **E-A, E-B, E-1** et **E-2** obtenues dans l'exemple 2,
- l'électrolyte polymère gélifié **EG** tel qu'obtenu ci-dessus à l'étape a), et
- une électrode négative comprenant du lithium métal sous forme d'un film de lithium métal de 100 µm d'épaisseur environ.

Le tableau 3 ci-dessous présente les différentes batteries **B-A, B-B, B-1** et **B-2** fabriquées respectivement avec les électrodes positives **E-A, E-B, E-1** et **E-2** et l'électrolyte polymère gélifié **EG :**

**TABLEAU 3**

| **Batteries** | **Electrode positive** | **Electrolyte** | **Commentaires** |
|---|---|---|---|
| **B-1** | **E-1** | **EG** | Batterie faisant partie de l'invention |
| **B-2** | **E-2** | **EG** | Batterie faisant partie de l'invention |
| **B-A^{(*)}** | **E-A** | **EG** | Batterie ne faisant pas partie de l'invention : matériau composite non conforme à l'invention |
| **B-B^{(*)}** | **E-B** | **EG** | Batterie ne faisant pas partie de l'invention : matériau composite non conforme à l'invention |

| | | | |
|---|---|---|---|
| ^{(*)} : Batterie ne faisant pas partie de l'invention | | | |

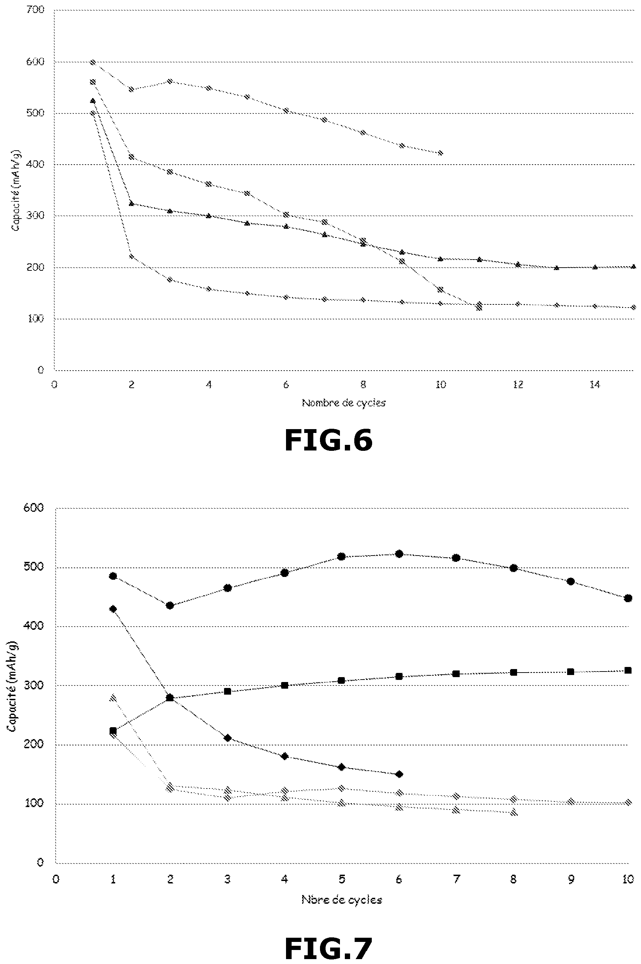

Les mesures de capacités spécifiques pendant la décharge pour les batteries **B-A, B-B, B-1** et **B-2** sont reportées sur la figure 6, figure sur laquelle la capacité spécifique (en mAh/g) est fonction du nombre de cycles avec un régime de courant de 2 lithiums en 10 h (∼ C/10). Sur cette figure 6, les mesures de capacités spécifiques pendant la décharge sont faites par rapport à la masse de soufre. D'après la figure 6, les batteries **B-1** (courbe avec les carrés pleins) et **B-2** (courbe avec les ronds pleins) faisant partie de l'invention présentent une capacité spécifique initiale d'environ 550 à 600 mAh/g, alors que les batteries **B-A** (courbe avec les losanges pleins) et **B-B** (courbe avec les triangles pleins) ne faisant pas partie de l'invention présentent une capacité spécifique initiale plus faible d'environ 500 à 525 mAh/g. De plus, la tenue au cyclage des batteries **B-A** et **B-B** est très insuffisante puisque la capacité spécifique diminue drastiquement après 2 cycles.

En particulier, la capacité spécifique de la batterie **B-2** est stable sur au moins 10 cycles.

Ces résultats montrent que la nature de l'agent carboné (e.g. structure poreuse) utilisé pour préparer le matériau composite est importante, afin d'obtenir une capacité spécifique initiale élevée et une bonne cyclabilité.

### EXEMPLE 4

### Préparation de deux électrodes positives E-3 et E-4 conformes à l'invention

Un matériau composite **2'** a été préparé comme dans l'exemple 1, mais avec un mélange de soufre S₈ et de noir de carbone Ketjenblack dans les proportions massique C/S : 18,8/81,2.

Chacun des matériaux composites **2** (obtenu dans l'exemple 1) et **2'** (tel que défini ci-dessus) a été mélangé à 80°C pendant 30 minutes avec du TEGDME, du PEI ou du PVdF-co-HFP, du LiTFSI, de l'eau (pour le matériau composite **2**) ou de la NMP (pour le matériau composite **2'**) dans le mélangeur Plastograph® EC tel que décrit dans l'exemple 2. La quantité de solvant utilisée (eau ou NMP) représentait au plus 30% en masse en environ de la masse totale du mélange de matériau composite, du TEGDME, du PEI ou PVdF-co-HFP, et du LiTFSI.

Chacune des pâtes ainsi obtenues a ensuite été laminée à 95°C sur un collecteur de courant en aluminium recouvert d'une couche à base de carbone.

Chacun des films ainsi obtenus a été séchée à 105°C pendant 30 minutes pour obtenir une électrode positive sous forme de film conforme à l'invention.

Le tableau 4 ci-dessous présente la composition massique des deux électrodes **E-3** et **E-4** faisant partie de l'invention et obtenues par le procédé décrit ci-dessus :

**TABLEAU 4**

| **Electrode** | **Noir de carbone (%)** | **LiTFSI (%)** | **TEGDME (%)** | **PVdF-co-HFP (%)** | **PEI (%)** | **S (%)** |
|---|---|---|---|---|---|---|
| **E-3** | 12,5 | 20 | 3 | 10 | 0 | 54 |
| **E-4** | 15 | 3,9 | 15,1 | 0 | 12 | 54 |

### EXEMPLE 5

### Préparation de trois électrodes positives E-C, E-D et E-E non conformes à l'invention

L'électrode positive **E-C** a été préparée par extrusion d'un mélange de poudres de matériau composite **2'** obtenu dans l'exemple 4, de sel de lithium (LiTFSI) et de copolymère du POE, puis par laminage à 95°C de la pâte ainsi obtenue sur un collecteur de courant en aluminium recouvert d'une couche à base de carbone. La pâte a ensuite été séchée à 105°C pendant 30 minutes pour obtenir une électrode positive sous forme de film non conforme à l'invention.

L'électrode positive **E-C** ne fait pas partie de l'invention puisqu'elle ne contient pas de polyéther linéaire liquide de faible masse molaire tel que défini dans l'invention.

L'électrode positive **E-D** a été préparée par extrusion d'un mélange de soufre élémentaire S₈, de noir de carbone Ketjenblack, de sel de lithium (LiTFSI) et de polyéther linéaire liquide de faible masse molaire TEGDME, puis par laminage à 95°C de la pâte ainsi obtenue sur un collecteur de courant en aluminium recouvert d'une couche à base de carbone. La pâte a ensuite été séchée à 105°C pendant 30 minutes pour obtenir une électrode positive sous forme de film non conforme à l'invention.

L'électrode positive **E-D** ne fait pas partie de l'invention puisque le mélange d'agent soufré et d'agent carboné n'a pas subi de prétraitement avant la fabrication de l'électrode positive.

L'électrode positive **E-E** a été préparée par extrusion d'un mélange de soufre élémentaire S₈, de noir de carbone Ketjenblack, de sel de lithium (LiTFSI) et de copolymère du POE, puis par laminage à 95°C de la pâte ainsi obtenue sur un collecteur de courant en aluminium recouvert d'une couche à base de carbone. La pâte a ensuite été séchée à 105°C pendant 30 minutes pour obtenir une électrode positive sous forme de film non conforme à l'invention.

L'électrode positive **E-E** ne fait pas partie de l'invention puisqu'elle ne contient pas de polyéther linéaire liquide de faible masse molaire tel que défini dans l'invention et que le mélange d'agent soufré et d'agent carboné n'a pas subi de prétraitement avant la fabrication de l'électrode positive.

Le tableau 5 ci-dessous présente la composition massique des trois électrodes **E-C, E-D,** et **E-E** ne faisant partie de l'invention et obtenues par le procédé décrit ci-dessus :

**TABLEAU 5**

| **Electrode** | **Noir de carbone (%)** | **LiTFSI (%)** | **Copolymère du POE (%)** | **PVdF-co-HFP (%)** | **TEGDME (%)** | **S (%)** |
|---|---|---|---|---|---|---|
| **E-C^{(*)}** | 15 | 6 | 25 | 10 | 0 | 54 |
| **E-D^{(*)}** | 7 | 17 | 0 | 20 | 3 | 54 |
| **E-E^{(*)}** | 5 | 9 | 16 | 16 | 0 | 54 |

| | | | | | | |
|---|---|---|---|---|---|---|
| ^{(*)} : Electrode ne faisant pas partie de l'invention | | | | | | |

### EXEMPLE 6

### Fabrication de batteries comprenant les électrodes positives E-C, E-D, E-E, E-3 et E-4

### a) Préparation d'un électrolyte polymère gélifié EG conforme à l'invention

Du sel de lithium (LiTFSI) (39% en masse) a été dissous dans du TEGDME (6% en masse) sous agitation magnétique à 50°C. Puis, au mélange obtenu, ont été ajoutés un copolymère du POE Zeospan® (20% en masse) et du PVdF-co-HFP (35% en masse). Le mélange résultant a été malaxé dans le mélangeur Plastograph® EC tel que décrit dans l'exemple 2, à 130°C pendant 1 heure. La pâte d'électrolyte obtenue a été laminée à 125°C entre deux films plastiques de PET siliconés.

### b) Préparation d'un électrolyte polymère solide ES non conforme à l'invention

L'électrolyte polymère solide a été préparé par extrusion d'un mélange de sel de lithium (LiTFSI) (12% en masse), de copolymère du POE Zeospan® (48% en masse) et de PVDF-co-HFP (40% en masse), puis par laminage de la pâte d'électrolyte obtenue à 125°C entre deux films plastiques de PET siliconés.

### c) Montage des batteries

Cinq batteries **B-C, B-D, B-E, B-3** et **B-4** ont été préparées en assemblant par laminage à 5 bars, à 80°C et sous atmosphère anhydre (air avec un point de rosée < -40°C) :
- chacune des cinq électrodes positives **E-C, E-D, E-E, E-3** et **E-4** obtenues dans les exemples 4 et 5,
- l'un des électrolytes polymères **ES** ou **EG** tels qu'obtenus ci-dessus à l'étape a) ou b), et
- une électrode négative comprenant du lithium métal.

Le tableau 6 ci-dessous présente les différentes batteries **B-C, B-D, B-E, B-3** et **B-4** respectivement fabriquées avec les électrodes positives **E-C, E-D, E-E, E-3** et **E-4** et l'un des électrolytes polymères **ES** ou **EG :**

**TABLEAU 6**

| **Batterie** | **Electrode positive** | **Electrolyte** | **Commentaires** |
|---|---|---|---|
| **B-3** | **E-3** | **EG** | Batterie faisant partie de l'invention |
| **B-4** | **E-4** | **EG** | Batterie faisant partie de l'invention |
| **B-C** | **E-C** | **ES** | Batterie ne faisant pas partie de l'invention : électrolyte et électrode non conformes à l'invention |
| **B-D** | **E-D** | **EG** | Batterie ne faisant pas partie de électrode non conforme à l'invention |
| **B-E** | **E-E** | **ES** | Batterie ne faisant pas partie de l'invention : électrolyte et électrode non conformes à l'invention |

Les mesures de capacité spécifiques pendant la décharge pour les batteries **B-C, B-D, B-E, B-3** et **B-4** sont reportées sur la figure 7, figure sur laquelle la capacité spécifique (en mAh/g) est fonction du nombre de cycles avec un régime de courant de 2 lithiums en 10 heures (∼ C/10). Sur cette figure 7, les mesures de capacités spécifiques pendant la décharge sont faites par rapport à la masse de soufre. D'après la figure 7, les batteries **E-3** (courbe avec les carrés noirs pleins) et **E-4** (courbe avec les ronds noirs pleins) faisant partie de l'invention présentent respectivement une capacité spécifique initiale d'environ 210 et 490 mAh/g, et les batteries **E-C** (courbe avec les triangles gris pleins), **E-D** (courbe avec les losanges gris pleins) et **E-E** (courbe avec les losanges noirs pleins) ne faisant partie de l'invention présentent respectivement une capacité spécifique initiale d'environ 290, 210 et 425 mAh/g. En outre, les batteries **B-C, B-D** et **B-E** présentent une tenue au cyclage très insuffisante puisque la capacité spécifique diminue drastiquement après 2 cycles.

La capacité spécifique des batteries **E-3** et **E-4** est stable pendant au moins 10 cycles.

Ces résultats montrent que la combinaison du prétraitement du mélange d'agent carboné et d'agent soufré et de l'utilisation de l'électrolyte polymère gélifié permet d'obtenir en même temps une nette amélioration de la capacité spécifique initiale et de la cyclabilité.

Ainsi, un véritable effet de synergie des compositions de l'électrode positive et de l'électrolyte est observé, notamment à 100°C (température de fonctionnement de la batterie dans les exemples de l'invention).

En effet, lorsque l'électrolyte polymère gélifié **EG** est remplacé par un électrolyte polymère solide **ES** (batterie **B-C,** courbe avec les triangles pleins gris), la capacité de décharge diminue après seulement quelques cycles. De la même façon, lorsque l'électrolyte polymère gélifié **EG** est remplacé par un électrolyte polymère solide **ES** et que le prétraitement du mélange d'agent soufré et d'agent carboné n'est pas effectué (batterie **B-E,** courbe avec les losanges noirs pleins), la capacité de décharge diminue drastiquement après seulement quelques cycles. De même, l'utilisation d'un électrolyte polymère gélifié **EG** avec une électrode positive classique, c'est-à-dire sans prétraitement du mélange d'agent soufré et d'agent carboné (batterie **B-D,** courbe avec les losanges gris pleins) donne des résultats similaires.

En revanche, l'utilisation d'une électrode positive et d'un électrolyte tous deux conformes à l'invention (batterie **B-3,** courbe avec les carrés noirs pleins) permet d'observer une stabilisation et même une légère augmentation de la capacité même après un nombre de cycles plus importants. La cyclabilité est donc fortement améliorée grâce à l'invention.

La figure 7 montre également que l'ajout dans l'électrode positive d'un polymère conducteur tel que le PEI permet de garantir une bonne cyclabilité de la batterie tout en augmentant d'environ 50% la valeur de la capacité de décharge initiale (batterie **B-4,** courbe avec les ronds noirs pleins).

## Revendications

1. Electrode positive **caractérisée en ce qu'**elle comprend :
- au moins un matériau composite comprenant du soufre (S) et du carbone (C) en tant que matière active d'électrode,
- au moins un liant polymère P₁,
- au moins un polyéther linéaire liquide de faible masse molaire, et
- au moins un sel de lithium L₁,
**en ce que** le soufre (S) représente au moins 40% en masse par rapport à la masse totale de ladite électrode positive, et
**en ce que** le matériau composite comprenant du soufre (S) et du carbone (C) est obtenu selon les étapes suivantes :
i) une étape de mélange d'un agent carboné essentiellement mésoporeux et d'un agent soufré choisi parmi le soufre élémentaire S₈ et un composé organique soufré comprenant au moins une liaison S-S, la quantité de soufre (S) dans ledit mélange allant de 75% à 85% en masse,
ii) une étape de broyage du mélange obtenu à l'étape précédente i),
iii) une étape de traitement thermique du mélange broyé obtenu à l'étape précédente ii) dans un récipient fermé, à une température suffisante pour faire fondre le soufre,
iv) une étape de broyage du mélange traité thermiquement de l'étape précédente iii),
ledit agent carboné utilisé à l'étape i) présentant les caractéristiques suivantes :
- une surface spécifique S_{BET} supérieure ou égale à 700 m²/g, ladite surface spécifique étant calculée par la méthode B.E.T,
- une taille moyenne des mésopores comprise entre 4 et 10 nm, ladite taille étant calculée par la méthode B.J.H, et
- un volume poreux total supérieur ou égal à 1 cm³/g, ledit volume poreux total étant calculé par la méthode B.E.T.

2. Electrode positive selon la revendication 1, **caractérisée en ce que** l'agent carboné est du noir de carbone.

3. Electrode positive selon la revendication 1 ou la revendication 2, **caractérisée en ce que** la température suffisante du traitement thermique de l'étape iii) va de 115°C à 270°C.

4. Electrode positive selon l'une quelconque des revendications précédentes, **caractérisée en ce que** l'étape iii) est effectuée sous atmosphère d'air sec.

5. Electrode positive selon l'une quelconque des revendications précédentes, **caractérisée en ce qu'**elle comprend de 2 à 20% en masse de polyéther linéaire liquide de faible masse molaire, par rapport à la masse totale de l'électrode positive.

6. Electrode positive selon l'une quelconque des revendications précédentes, **caractérisée en ce que** le polyéther linéaire liquide de faible masse molaire est choisi parmi :
* les polyéthylènes glycols de formule H-[O-CH₂-CH₂]ₘ-OH, dans laquelle m est compris entre 1 et 13,
* les éthers de glycol de formule R-[O-CH₂-CH₂]p-O-R', dans laquelle p est compris entre 1 et 13 et R et R', identiques ou différents, sont des groupes alkyles linéaires, substitués ou cycliques,
* les éthers de formule R¹-[CH₂-O]_{q}-R¹', dans laquelle q est compris entre 1 et 13, R¹ et R¹', identiques ou différents, sont des alkyles linéaires, substitués ou cycliques,
* les éthers cycliques, les polyéthers cycliques, et
* un de leurs mélanges.

7. Electrode positive selon l'une quelconque des revendications précédentes, **caractérisée en ce que** le polyéther est le tétra éthylène glycol diméthyléther (TEGDME).

8. Electrode positive selon l'une quelconque des revendications précédentes, **caractérisée en ce qu'**elle comprend de 5 à 20% en masse de liant polymère P₁, par rapport à la masse totale de l'électrode positive.

9. Electrode positive selon l'une quelconque des revendications précédentes, **caractérisée en ce qu'**elle comprend de 2 à 25% en masse de sel de lithium L₁, par rapport à la masse totale de l'électrode positive.

10. Electrode positive selon l'une quelconque des revendications précédentes, **caractérisée en ce que** le liant polymère P₁ est le polyéthylèneimine (PEI) ou la polyaniline sous forme de sel éméraldine (ES).

11. Procédé de fabrication d'une électrode positive telle que définie à l'une quelconque des revendications 1 à 10, **caractérisé en ce qu'**il comprend les étapes suivantes :
a) une étape de mélange d'un matériau composite comprenant du soufre (S) et du carbone (C) avec au moins un liant polymère P₁, au moins un sel de lithium L₁, au moins un polyéther linéaire liquide de faible masse molaire, et éventuellement au moins un solvant dudit liant polymère P₁, pour obtenir une pâte d'électrode,
ledit matériau composite comprenant du soufre (S) et du carbone (C) étant obtenu selon les étapes suivantes :
i) une étape de mélange d'un agent carboné essentiellement mésoporeux et d'un agent soufré choisi parmi le soufre élémentaire S₈ et un composé organique soufré comprenant au moins une liaison S-S, la quantité de soufre (S) dans ledit mélange allant de 75% à 85% en masse,
ii) une étape de broyage du mélange obtenu à l'étape précédente i),
iii) une étape de traitement thermique du mélange broyé obtenu à l'étape précédente ii) dans un récipient fermé, à une température suffisante pour faire fondre le soufre,
iv) une étape de broyage du mélange traité thermiquement de l'étape précédente iii),
ledit agent carboné utilisé à l'étape i) présentant les caractéristiques suivantes :
- une surface spécifique S_{BET} supérieure ou égale à 700 m²/g, ladite surface spécifique étant calculée par la méthode B.E.T,
- une taille moyenne des mésopores comprise entre 4 et 10 nm, ladite taille étant calculée par la méthode B.J.H, et
- un volume poreux total supérieur ou égal à 1 cm³/g, ledit volume poreux total étant calculé par la méthode B.E.T,
b) une étape d'application de ladite pâte d'électrode sur au moins un support,
c) une étape de séchage de ladite pâte d'électrode pour obtenir une électrode positive sous forme de film supporté.

12. Procédé selon la revendication 11, **caractérisé en ce que** ledit solvant représente moins de 30% en masse de la masse totale du mélange de matériau composite, de liant polymère P₁, de sel de lithium L₁ et de polyéther.

13. Procédé selon la revendication 11 ou la revendication 12, **caractérisé en ce que** l'étape a) est réalisée par extrusion ou par broyage.

14. Batterie lithium-soufre, **caractérisée en ce qu'**elle comprend :
- une électrode positive telle que définie à l'une quelconque des revendications 1 à 10 ou telle que fabriquée selon le procédé défini à l'une quelconque des revendications 11 à 13,
- une électrode négative métallique choisie parmi le lithium et un alliage de lithium,
- un électrolyte polymère gélifié comprenant au moins un polyéther linéaire liquide de faible masse molaire tel que défini à la revendication 6, au moins un sel de lithium L₂ et au moins un liant polymère P₂.

15. Batterie lithium-soufre selon la revendication 14, **caractérisée en ce que** l'électrolyte polymère gélifié comprend de 20 à 45% en masse de sel de lithium L₂, par rapport à la masse totale de l'électrolyte polymère gélifié.

16. Batterie lithium-soufre selon la revendication 14 ou la revendication 15, **caractérisée en ce que** le sel de lithium L₂ est choisi parmi le fluorate de lithium (LiFO₃), le bis(trifluorométhanesulfonyl) imide de lithium (LiTFSI), l'hexafluorophosphate de lithium (LiPF₆), le fluoroborate de lithium (LiBF₄), le métaborate de lithium (LiBO₂), le perchlorate de lithium (LiClO₄), le nitrate de lithium (LiNO₃), le lithium bis(fluorosulfonyl)imide (LiFSI), et leurs mélanges.

17. Batterie lithium-soufre selon l'une quelconque des revendications 14 à 16, **caractérisée en ce que** l'électrolyte polymère gélifié comprend de 3 à 20% en masse de polyéther, par rapport à la masse totale de l'électrolyte polymère gélifié.

18. Batterie lithium-soufre selon l'une quelconque des revendications 14 à 17, **caractérisée en ce que** l'électrolyte polymère gélifié comprend de 40 à 80% en masse de liant polymère P₂, par rapport à la masse totale de l'électrolyte polymère gélifié.

19. Batterie lithium-soufre selon l'une quelconque des revendications 14 à 18, **caractérisée en ce que** le liant polymère P₂ est choisi parmi les polyoléfines telles que les homopolymères ou les copolymères d'éthylène et de propylène, ou un mélange d'au moins deux de ces polymères ; les homopolymères et les copolymères d'oxyde d'éthylène (e.g. POE, copolymère du POE), d'oxyde de méthylène, d'oxyde de propylène, d'épichlorhydrine ou d'allylglycidyléther, ou leurs mélanges ; les polymères halogénés tels que les homopolymères et les copolymères de chlorure de vinyle, de fluorure de vinylidène (PVdF), de chlorure de vinylidène, de tétrafluorure d'éthylène, ou de chlorotrifluoroéthylène, les copolymères de fluorure de vinylidène et de hexafluoropropylène (PVdF-co-HFP) ou leurs mélanges ; les polymères non conducteurs électroniques de type anionique tels que le poly(styrène sulfonate), le poly(acide acrylique), le poly(glutamate), l'alginate, la pectine, ou leurs mélanges ; les polyacrylates ; et un de leurs mélanges.

## Patentansprüche

1. Positive Elektrode, **dadurch gekennzeichnet, dass** sie umfasst:
- mindestens ein Verbundmaterial, umfassend Schwefel (S) und Kohlenstoff (C) als aktives Elektrodenmaterial,
- mindestens ein Polymerbindemittel P₁,
- mindestens einen flüssigen linearen Polyether geringer molarer Masse, und
- mindestens ein Lithiumsalz L₁,
dass der Schwefel (S) mindestens 40 Ma% im Verhältnis zur Gesamtmasse der positiven Elektrode darstellt, und
dass das Verbundmaterial, das Schwefel (S) und Kohlenstoff (C) umfasst, gemäß den folgenden Schritten erhalten ist:
i) einem Mischschritt eines kohlenstoffhaltigen, im Wesentlichen mesoporösen Mittels und eines schwefelhaltigen Mittels, ausgewählt aus dem elementaren Schwefel S₈ und einer schwefelhaltigen organischen Verbindung, die mindestens eine S-S-Bindung umfasst, wobei die Schwefelmenge (S) in dem Gemisch von 75 bis 85Ma% reicht,
ii) einem Zerkleinerungsschritt des in vorangehendem Schritt i) erhaltenen Gemischs,
iii) einem thermischen Behandlungsschritt des in vorangehendem Schritt ii) erhaltenen zerkleinerten Gemischs in einem verschlossenen Behälter bei einer Temperatur, die ausreichend ist, dass der Schwefel schmilzt,
iv) einem Zerkleinerungsschritt des thermisch behandelten Gemisch des vorangehenden Schritts iii),
wobei das in Schritt i) verwendete kohlenstoffhaltige Mittel die folgenden Merkmale aufweist:
- eine spezifische Oberfläche S_{BET} größer oder gleich 700 m²/g, wobei die spezifische Oberfläche mit der B.E.T.-Methode berechnet wird,
- eine mittlere Größe der Mesoporen zwischen 4 und 10 nm inklusive, wobei die Größe mit der B.J.H.-Methode berechnet wird, und
- ein Porenvolumen insgesamt größer oder gleich 1 cm³/g, wobei das Porenvolumen insgesamt mit der B.E.T.-Methode berechnet wird.

2. Positive Elektrode nach Anspruch 1, **dadurch gekennzeichnet, dass** das kohlenstoffhaltige Mittel Karbonschwarz ist.

3. Positive Elektrode nach Anspruch 1 oder Anspruch 2, **dadurch gekennzeichnet, dass** die für die thermische Behandlung von Schritt iii) ausreichende Temperatur von 115 °C bis 270 °C beträgt.

4. Positive Elektrode nach einem der vorangehenden Ansprüche, **dadurch gekennzeichnet, dass** der Schritt iii) in einer Atmosphäre trockener Luft durchgeführt wird.

5. Positive Elektrode nach einem der vorangehenden Ansprüche, **dadurch gekennzeichnet, dass** sie 2 bis 20 Ma% flüssigen linearen Polyether geringer molarer Masse im Verhältnis zur Gesamtmasse der positiven Elektrode umfasst.

6. Positive Elektrode nach einem der vorangehenden Ansprüche, **dadurch gekennzeichnet, dass** der flüssige lineare Polyether geringer molarer Masse ausgewählt ist aus:
* den Polyethylenglykolen der Formel H-[O-CH2-CH₂]ₘ-OH, wobei m zwischen 1 und 13 inklusive ist,
* den Glykolethern der Formel R-[O-CH₂-CH₂]ₚ-O-R', wobei p zwischen 1 und 13 inklusive ist und R und R', identisch oder unterschiedlich, lineare, substituierte oder cyclische Alkylgruppen sind,
* den Ethern der Formel R¹-[CH₂-0]_{q}-R¹', wobei q zwischen 1 und 13 inklusive ist, R¹ und R¹', identisch oder unterschiedlich, lineare, substituierte oder cyclische Alkyle sind,
*den cyclischen Ethern, den polycyclischen Polyethern, und
* einem ihrer Gemische.

7. Positive Elektrode nach einem der vorangehenden Ansprüche, **dadurch gekennzeichnet, dass** der Polyether der Tetraethylenglycoldimethylether (TEGDME) ist.

8. Positive Elektrode nach einem der vorangehenden Ansprüche, **dadurch gekennzeichnet, dass** sie 5 bis 20 Ma% Polymerbindemittel P₁ im Verhältnis zur Gesamtmasse der positiven Elektrode umfasst.

9. Positive Elektrode nach einem der vorangehenden Ansprüche, **dadurch gekennzeichnet, dass** sie 2 bis 25 Ma% Lithiumsalz L₁ im Verhältnis zur Gesamtmasse der positiven Elektrode umfasst.

10. Positive Elektrode nach einem der vorangehenden Ansprüche, **dadurch gekennzeichnet, dass** das Polymerbindemittel P₁ das Polyethylenimin (PEI) oder das Polyanilin in Form von Emeraldinsalz (ES) ist.

11. Herstellungsverfahren einer positiven Elektrode nach einem der Ansprüche 1 bis 10, **dadurch gekennzeichnet, dass** es die folgenden Schritte umfasst:
a) einen Mischschritt eines Verbundmaterials, umfassend Schwefel (S) und Kohlenstoff (C) mit mindestens einem Polymerbindemittel P₁, mindestens einem Lithiumsalz L₁, mindestens einem flüssigen linearen Polyether geringer molarer Masse und eventuell mindestens einem Lösungsmittel des Polymerbindemittels P₁, um eine Elektrodenmasse zu erhalten,
wobei das Verbundmaterial, das Schwefel (S) und Kohlenstoff (C) umfasst, gemäß den folgenden Schritten erhalten ist:
i) einem Mischschritt eines kohlenstoffhaltigen, im Wesentlichen mesoporösen Mittels und eines schwefelhaltigen Mittels, ausgewählt aus dem elementaren Schwefel S₈ und einer schwefelhaltigen organischen Verbindung, die mindestens eine S-S-Bindung umfasst, wobei die Schwefelmenge (S) in dem Gemisch von 75 bis 85 Ma% reicht,
ii) einem Zerkleinerungsschritt des in vorangehendem Schritt i) erhaltenen Gemischs,
iii) einem thermischen Behandlungsschritt des in vorangehendem Schritt ii) erhaltenen zerkleinerten Gemischs in einem verschlossenen Behälter bei einer Temperatur, die ausreichend ist, dass der Schwefel schmilzt,
iv) einem Zerkleinerungsschritt des thermisch behandelten Gemisch des vorangehenden Schritts iii),
wobei das in Schritt i) verwendete kohlenstoffhaltige Mittel die folgenden Merkmale aufweist:
- eine spezifische Oberfläche S_{BET} größer oder gleich 700 m²/g, wobei die spezifische Oberfläche mit der B.E.T.-Methode berechnet wird,
- eine mittlere Größe der Mesoporen zwischen 4 und 10 nm inklusive, wobei die Größe mit der B.J.H.-Methode berechnet wird, und
- ein Porenvolumen insgesamt größer oder gleich 1 cm³/g, wobei das Porenvolumen insgesamt mit der B.E.T.-Methode berechnet wird,
b) einem Schritt des Auftragens der Elektrodenmasse auf mindestens einen Untergrund,
c) einem Trocknungsschritt der Elektrodenmasse, um eine positive Elektrode in Form einer Trägerfolie zu erhalten.

12. Verfahren nach Anspruch 11, **dadurch gekennzeichnet, dass** das Lösungsmittel unter 30 Ma% der Gesamtmasse des Verbundmaterialgemischs, von Polymerbindemittel P₁, von Lithiumsalz L₁ und von Polyether darstellt.

13. Verfahren nach Anspruch 11 oder Anspruch 12, **dadurch gekennzeichnet, dass** der Schritt a) durch Extrusion oder Zerkleinern durchgeführt wird.

14. Lithium-Schwefel-Batterie, **dadurch gekennzeichnet, dass** sie umfasst:
- eine positive Elektrode nach einem der Ansprüche 1 bis 10 oder hergestellt nach dem Verfahren nach einem der Ansprüche 11 bis 13,
- eine negative Metallelektrode, ausgewählt aus dem Lithium und einer Lithiumlegierung,
- einen gelartigen Polymerelektrolyten, umfassend mindestens einen flüssigen linearen Polyether geringer molarer Masse nach Anspruch 6, mindestens ein Lithiumsalz L₂ und mindestens ein Polymerbindemittel P₂.

15. Lithium-Schwefel-Batterie nach Anspruch 14, **dadurch gekennzeichnet, dass** der gelartige Polymerelektrolyt 20 bis 45 Ma% Lithiumsalz L₂ im Verhältnis zur Gesamtmasse des gelartigen Polymerelektrolyten umfasst.

16. Lithium-Schwefel-Batterie nach Anspruch 14 oder Anspruch 15, **dadurch gekennzeichnet, dass** das Lithiumsalz L₂ aus dem Lithiumfluorat (LiFO₃), dem Lithium-Bis(Trifluormethansulfonyl)imid (LiTFSI), dem Lithiumhexafluorphosphat (LiPF₆), dem Lithiumfluorborat (LiBF₄), dem Lithiummetaborat (LiBO₂), dem Lithiumperchlorat (LiClO₄), dem Lithiumnitrat (LiNO₃), dem Lithium-Bis(fluorsulfonyl)imid (LiFSI) und ihren Gemischen ausgewählt ist.

17. Lithium-Schwefel-Batterie nach einem der Ansprüche 14 bis 16, **dadurch gekennzeichnet, dass** der gelartige Polymerelektrolyt 3 bis 20 Ma% Polyether im Verhältnis zur Gesamtmasse des gelartigen Polymerelektrolyten umfasst.

18. Lithium-Schwefel-Batterie nach einem der Ansprüche 14 bis 17, **dadurch gekennzeichnet, dass** der gelartige Polymerelektrolyt 40 bis 80 Ma% Polymerbindemittel P₂ im Verhältnis zur Gesamtmasse des gelartigen Polymerelektrolyten umfasst.

19. Lithium-Schwefel-Batterie nach einem der Ansprüche 14 bis 18, **dadurch gekennzeichnet, dass** das Polymerbindemittel P₂ aus den Polyolefinen wie den Homopolymeren oder den Copolymeren von Ethylen und von Propylen oder einem Gemisch von mindestens zwei dieser Polymere; den Homopolymeren und den Copolymeren von Ethylenoxid (z. B. POE, POE-Copolymer), Methylenoxid, Propylen-, Epichlorhydrin- oder Allylglycidyletheroxid oder ihren Gemischen; den halogenierten Polymeren wie den Homopolymeren und den Copolymeren von Vinylchlorid, von Vinylidenfluorid (PVdF), von Vinylidenchlorid, von Ethylentetrafluorid oder von Chlortrifluorethylen, den Copolymeren von Vinylidenfluorid und von Hexafluorpropylen (PVdF-co-HFP) oder ihren Gemischen; den nicht elektronisch leitenden Polymeren vom Typ anionisch wie dem Poly(styrolsulfonat), der Poly(acrylsäue), dem Poly(glutamat), dem Alginat, dem Pektin oder ihren Gemischen; den Polyacrylaten und einem ihrer Gemische ausgewählt ist.

## Claims

1. Positive electrode **characterized in that** it comprises:
- at least one composite material comprising sulfur (S) and carbon (C) as active electrode material,
- at least one polymer binder P₁;
- at least one liquid linear polyether of low molecular weight; and
- at least one lithium salt L₁;
**in that** the sulfur (S) represents at least 40 % by weight relative to the total weight of said positive electrode; and
**in that** the composite material comprising sulfur (S) and carbon (C) is obtained with the following steps:
i) a step to mix an essentially mesoporous carbon agent and a sulfur agent selected from among elementary sulfur S₈ and an organic sulfur compound comprising at least one S-S bond, the amount of sulfur (S) in said mixture ranging from 75 % to 85 % by weight;
ii) a step to grind the mixture obtained at preceding step i);
iii) a step to heat treat the ground mixture obtained at preceding step ii) in a closed container at sufficient temperature to cause the sulfur to melt;
iv) a step to grind the heat-treated mixture of preceding step iii);
said carbon agent used at step i) having the following characteristics:
- a specific surface area S_{BET} of 700 m²/g or higher, said specific surface area being calculated using the B.E.T. method;
- a mean mesopore size of between 4 and 10 nm, said size being calculated using the B.J.H. method; and
- a total pore volume of 1 cm³/g or higher, said total pore volume being calculated using the B.E.T. method.

2. The positive electrode according to claim 1, **characterized in that** the carbon agent is carbon black.

3. The positive electrode according to claim 1 or claim 2, **characterized in that** the sufficient temperature for heat treatment at step iii) ranges from 115 °C to 270 °C.

4. The positive electrode according to any of the preceding claims, **characterized in that** the step iii) is performed in a dry air atmosphere.

5. The positive electrode according to any of the preceding claims, **characterized in that** it comprises from 2 to 20 % by weight of liquid linear polyether of low molecular weight, relative to the total weight of the positive electrode.

6. The positive electrode according to any of the preceding claims, **characterized in that** the liquid linear polyether of low molecular weight is selected from among:
* polyethylene glycols of formula H-[O.CH₂-CH₂]ₘ-OH where m is between 1 and 13;
* glycol ethers of formula R-[O-CH₂-CH₂]ₚ-O-R' where p is between 1 and 13 and R and R', the same or different, are substituted or cyclic linear alkyl groups;
* ethers of formula R¹-[CH₂-O]_{q}-R¹' where q is between1 and 13, R¹ and R¹', the same or different, are substituted or cyclic linear alkyls;
* cyclic ethers, cyclic polyethers; and
* one of the mixtures thereof.

7. The positive electrode according to any of the preceding claims, **characterized in that** the polyether is tetra ethylene glycol dimethyl ether (TEGDME).

8. The positive electrode according to any of the preceding claims, **characterized in that** it comprises from 5 to 20 % by weight of polymer binder P₁ relative to the total weight of the positive electrode.

9. The positive electrode according to any of the preceding claims, **characterized in that** it comprises from 2 to 25 % by weight of lithium salt L₁ relative to the total weight of the positive electrode.

10. The positive electrode according to any of the preceding claims, **characterized in that** the polymer binder P₁ is polyethyleneimine (PEI) or polyaniline in the form of an emeraldine salt (ES).

11. Method for manufacturing a positive electrode such as defined in any of claims 1 to 10, **characterized in that** it comprises the following steps:
a) a step to mix a composite material comprising sulfur (S) and carbon (C) with at least one polymer binder P₁, at least one lithium salt L₁, at least one liquid linear polyether of low molecular weight and optionally at least one solvent of said polymer binder P₁ to obtain an electrode paste
said composite material comprising sulfur (S) and carbon (C) being obtained with the following steps:
i) a step to mix an essentially mesoporous carbon agent and a sulfur agent selected from among elementary sulfur S₈ and an organic sulfur compound comprising at least one S-S bond, the amount of sulfur (S) in said mixture ranging from 75 % to 85 % by weight,
ii) a step to grind the mixture obtained at preceding step i);
iii) a step to heat treat the ground mixture obtained at preceding step ii) in a closed container at sufficient temperature to cause the sulfur to melt;
iv) a step to grind the heat-treated mixture of preceding step iii);
said carbon agent used at step i) having the following characteristics:
- a specific surface area S_{BET} of 700 m²/g or higher, said specific surface area being calculated using the B.E. T. method;
- a mean mesopore size of between 4 and 10 nm, said size being calculated using the B.J.H. method; and
- a total pore volume of 1 cm³/g or higher, said total pore volume being calculated using the B.E.T. method;
b) a step to apply said electrode paste onto at least one support;
c) a step to dry said electrode paste to obtain a positive electrode in the form of a supported film.

12. The method according to claim 11, **characterized in that** said solvent represents less than 30 % by weight of the total weight of the mixture of composite material, polymer binder P₁, lithium salt L₁ and polyether.

13. The method according to claim 11 or claim 12, **characterized in that** step a) is performed by extrusion or grinding.

14. Lithium-sulfur battery **characterized in that** it comprises.
- a positive electrode such as defined in any of claims 1 to 10, or such as manufactured according to the method defined in any of claims 11 to 13;
- a metal negative electrode selected from among lithium and a lithium alloy;
- a gelled polymer electrolyte comprising at least one liquid linear polyether of low molecular weight such as defined in claim 6, at least one lithium salt L₂ and at least one polymer binder P₂.

15. The lithium-sulfur battery according to claim 14, **characterized in that** the gelled polymer electrolyte comprises from 20 to 45 % by weight of lithium salt L₂ relative to the total weight of the gelled polymer electrolyte.

16. The lithium-sulfur battery according to claim 14 or claim 15, **characterized in that** the lithium salt L₂ is selected from among lithium fluorate (LiFO₃), lithium bis(trifluoromethanesulfonyl) imide (LiTFSI), lithium hexafluorophosphate ((LiPF6), lithium fluoroborate (LiBF₄), lithium metaborate (LiBO₂), lithium perchlorate (LiClO₄), lithium nitrate (LiNO₃), lithium bis(fluorosulfonylimide (LiFSI) and mixtures thereof.

17. The lithium-sulfur battery according to any of claims 14 to 16, **characterized in that** the gelled polymer electrolyte comprises from 3 to 20 % by weight of polyether relative to the total weight of the gelled polymer electrolyte.

18. The lithium-sulfur battery according to any of claims 14 to 17, **characterized in that** the gelled polymer electrolyte comprises from 40 to 80 % by weight of polymer binder P₂ relative to the total weight of the gelled polymer electrolyte.

19. The lithium-sulfur battery according to any of claims 14 to 18, **characterized in that** the polymer binder P₂ is selected from among polyolefins such as homopolymers or copolymers of ethylene and propylene, or a mixture of at least two of these polymers; homopolymers and copolymers of ethylene oxide (e.g. POE, POE copolymer), of methylene oxide, of propylene oxide, of epichlorohydrin or allyl glycidyl ether, or mixtures thereof; halogenated polymers such as homopolymers and copolymers of vinyl chloride, of vinylidene fluoride (PVDF), of vinylidene chloride, of ethylene tetrafluoride or chlorotrifluoroethylene, the copolymers of vinylidene fluoride and hexafluoropropylene (PVDF-co-HFP) or mixtures thereof; non-electronic conducting polymers of anionic type such as poly(styrene sulfonate), poly(acrylic acid), poly(glutamate), alginate, pectin or mixtures thereof; polyacrylates; and one of the mixtures thereof.
